Europäisches Patentamt

European Patent Office

Office européen des brevets

(19)

(11) Numéro de publication : **0 477 115 A1**

# (12) DEMANDE DE BREVET EUROPEEN

(21) Numéro de dépôt : **91440073.4**

(22) Date de dépôt : **17.09.91**

(51) Int. Cl.$^5$ : **B60F 1/00,** B61D 3/18,
B61D 3/20

(30) Priorité : **17.09.90 FR 9011592**

(43) Date de publication de la demande :
**25.03.92 Bulletin 92/13**

(84) Etats contractants désignés :
**AT BE CH DE ES GB IT LI LU NL**

(71) Demandeur : **LOHR INDUSTRIE**
**29, rue du 14 Juillet**
**F-67980 Hangenbieten (FR)**

(72) Inventeur : **Andre, Jean-luc**
**40 Mont Saint-Jean**
**F-67210 Obernai (FR)**

(74) Mandataire : **Metz, Paul**
**Cabinet METZ PATNI 63, rue de la Ganzau**
**F-67100 Strasbourg (FR)**

(54) **Structure transversale d'extrémité permettant la transformation rail-route d'une unité routière.**

(57)    Structure transversale d'extrémité pour une unité routière permettant sa transformation rail-route caractérisée en ce qu'elle comporte au voisinage de chacune de ses extrémités des moyens d'accouplement et des moyens de verrouillage à réception verticale et horizontale permettant alternativement un accouplement et un verrouillage par déplacement vertical de l'unité routière (5) porteuse d'un chargement et un accouplement par translation relative longitudinale entre les bogies (7) et l'unité routière (5).

Cette invention intéresse les professionnels des transports routiers et ferroviaires.

EP 0 477 115 A1

FIG.1

La présente invention se rapporte à une structure transversale d'extrémité pour semi-remorque ou caisse mobile convertible rail-route permettant un accouplement par déplacement horizontal ou vertical sur une traverse supérieure de bogie.

En raison de l'importance croissante des chemins de fer dans les transports à longue distance et l'accroissement énorme du trafic routier, il est apparu notablement intéressant de pouvoir convertir rapidement un véhicule routier remorqué en une unité roulante sur rails.

Ceci concerne les remorques hors gabarit routier nécessitant une assistance au transport par une escorte policière mais aussi des remorques plus petites.

En effet, le fret ferroviaire s'avère dans bien des cas notablement plus avantageux. Toutefois, son important inconvénient concerne la nécessité de deux transferts du chargement lors du départ et lors de l'arrivée du train puis sur un véhicule routier. En effet, les trains de marchandises ne vont que très rarement jusqu'à la destination finale du produit.

Ces transbordements occasionnent une perte de temps et des risques importants liés à la manipulation et aux changements de température et d'atmosphère.

La présente invention a pour but de rendre rapide et sûr l'accouplement d'une unité routière avec les supports porteurs de bogies en vue de réaliser la transformation rapide d'une remorque routière ou caisse mobile en unité ferroviaire pour leur permettre d'emprunter les voies ferrées et de bénéficier ainsi de tous les avantages du transport ferroviaire.

A cet effet, la présente invention se rapporte à une structure transversale d'extrémité pour semi-remorque ou caisse mobile convertible rail-route.

De nombreux avantages découlent de la structure transversale d'extrémité selon l'invention tels que ceux mentionnés ci-dessus :
. avantages multiples d'exploitation en évitant les inconvénients des transports routiers exceptionnels et en bénéficiant de la rapidité, des qualités et du moindre coût du transport ferroviaire ;
. conversion simple et rapide ne nécessitant pas de moyen(s) extérieur(s) de levage ni de manutention ;
. travaux d'adjonctions et de transformation mécanique de la remorque ne présentant aucune difficulté technique ;
. simplicité des moyens d'adaptation qui ne comportent aucune pièce détachée intermédiaire ou de liaison ;
. immobilisation latérale et verticale garanties ;
. verrouillage de sécurité.

Les caractéristiques techniques et d'autres avantages de l'invention sont consignés dans la description qui suit, effectuée à titre d'exemple non limitatif sur un mode d'exécution en référence aux dessins accompagnants dans lesquels :

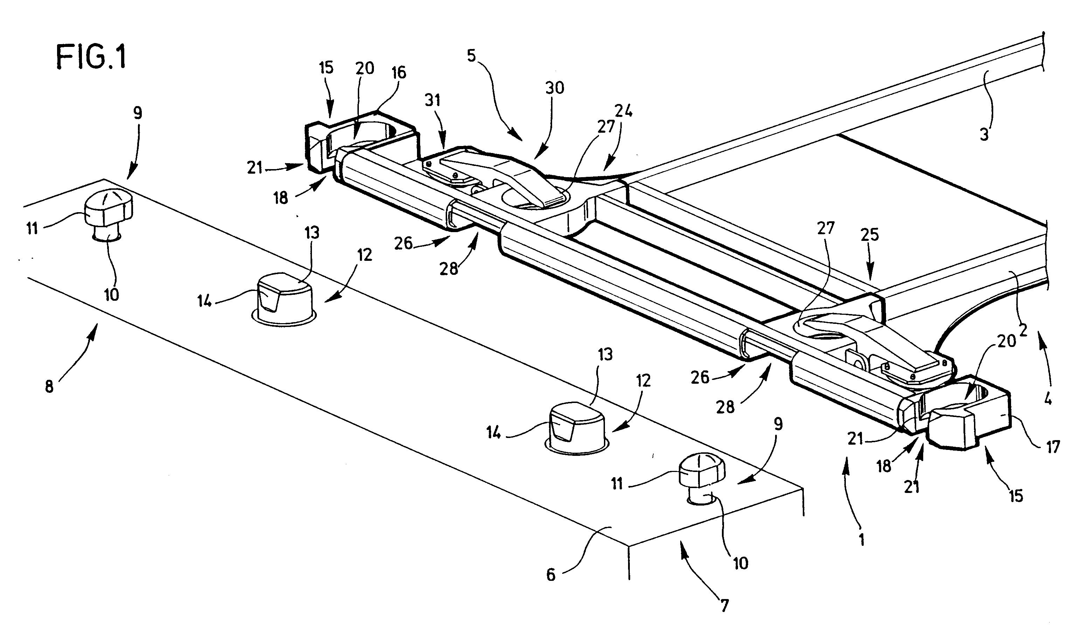

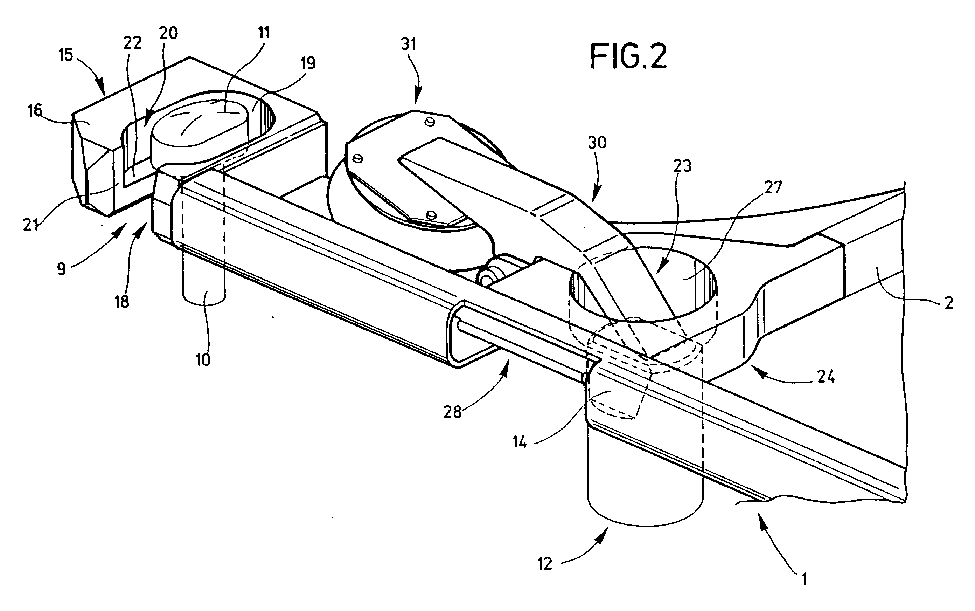

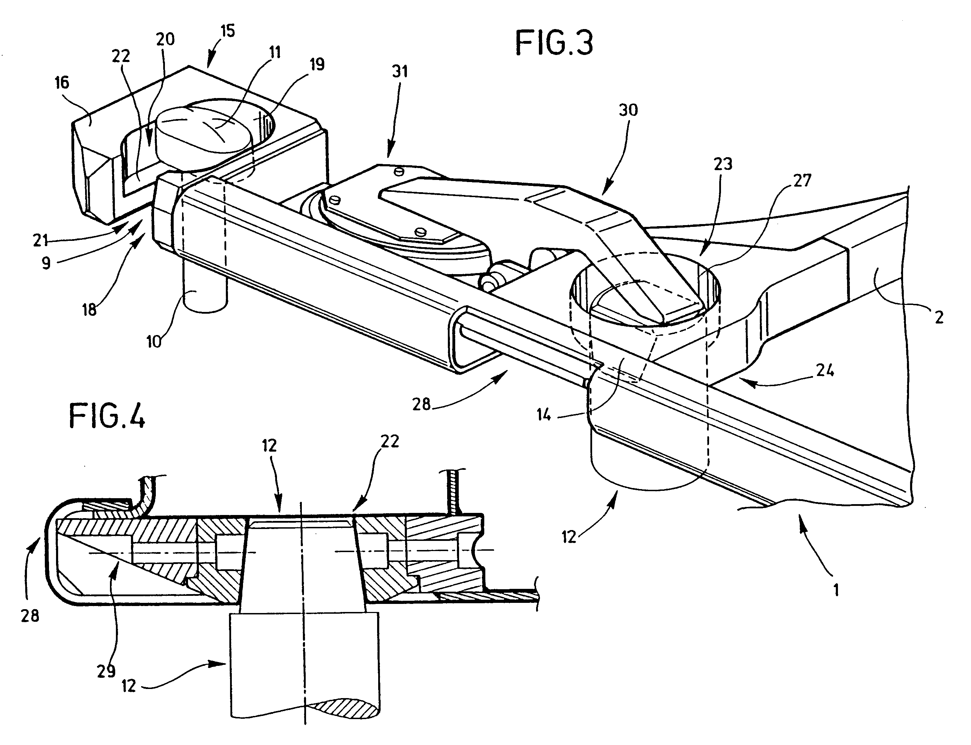

. la figure 1 est une vue en perspective d'ensemble de la structure transversale d'extrémité selon l'invention et de la traverse de bogie correspondante ;
. la figure 2 est une vue de détail en perspective montrant les moyens de verrouillage et d'extraction avant verrouillage ;
. la figure 3 est une vue identique à celle de la figure 2 après verrouillage ;
. la figure 4 est une vue en coupe transversale au niveau d'un plot d'immobilisation et de centrage.

La présente invention se rapporte à une structure transversale d'accouplement destinée à être intégrée à l'avant et à l'arrière d'une unité routière porteuse d'un chargement du type remorque ou caisse mobile pour venir s'adapter sur la traverse porteuse d'un bogie du type intermodal en vue de constituer, par une manipulation simple et rapide, une unité ferroviaire présentant toutes les garanties de cohésion et de résistance mécanique que réclame ce mode de transport.

La structure transversale d'extrémité comporte des moyens d'accouplement et de désaccouplement et des moyens de verrouillage permettant alternativement un accouplement et un verrouillage par un déplacement vertical de l'unité routière par rapport aux bogies et un accouplement et un verrouillage par translation relative entre les bogies et l'unité routière.

Plus particulièrement, comme on le verra ci-après, l'immobilisation s'effectue par verrouillage de la structure transversale sur la traverse de bogie correspondante qui comprend aux extrémités deux verrous quart de tour, du type connu sous le terme "twist lock" et deux plots de centrage, par exemple, mais non nécessairement, chanfreinés.

Ces moyens de verrouillage et d'accouplement prévus sur la traverse de bogie coopèrent avec des formes techniques complémentaires et d'autres moyens prévus sur la structure transversale d'extrémité selon l'invention.

Bien entendu, pour constituer une unité ferroviaire complète, la remorque, caisse mobile ou analogue doit posséder une telle structure transversale à l'avant et une autre structure identique à l'arrière.

On décrira tout d'abord ci-après les moyens généraux prévus pour assurer l'accouplement-verrouillage de la structure transversale d'extrémité.

Une structure transversale d'extrémité 1 est montée à chacune des extrémités des longerons 2 et 3 d'un châssis 4 d'une unité routière 5 porteuse d'un chargement de type quelconque, mais plus particulièrement d'une remorque routière, par exemple une semi-remorque, ou d'une caisse mobile convertible.

Cette conversion ne soulève aucune difficulté d'ordre général réglementaire ou autre, car les gabarits routiers légaux s'avèrent partout plus faibles que les gabarits ferroviaires.

Chaque structure transversale d'extrémité est appelée à être montée et verrouillée sur un support transversal porteur 6 d'un bogie 7 en vue de constituer une unité ferroviaire susceptible de s'intégrer dans un train.

On comprendra par bogie toute structure ferroviaire élémentaire roulante et porteuse susceptible de constituer un support d'extrémité porteur dans un convoi ferroviaire constitué d'une suite d'éléments articulés entre eux par la ou lesdites structures ferroviaires.

On se reportera aux différentes figures pour la suite de la description.

Les supports transversaux porteurs 6 de bogie 7 sont équipés de moyens d'accouplement destinés à venir se verrouiller à des moyens complémentaires correspondants, situés sur la structure transversale 1 d'extrémité.

Sans pour autant vouloir limiter la portée de la partie descriptive ci-après, on prendra à titre d'exemple la réalisation représentée et quelques unes de ses variantes dérivées.

On distingue ainsi, sur une platine porteuse 8, des éléments de verrouillage 9 disposés au voisinage des extrémités, du type par exemple à pivotement à tête 10 montée sur une tige ou un axe 11 constituant des pièces de verrou. Ces éléments de verrouillage constituent par exemple des verrous du type connu sous le terme "twist lock". Ils sont utilisés comme moyens d'immobilisation verticale de la remorque par rapport aux supports transversaux de bogie.

Dans l'espace défini entre les deux éléments de verrouillage ci-dessus, par exemple dans l'alignement de ceux-ci, sont prévus deux blocs de centrage, par exemple des plots de centrage tels que 12, de forme générale conique à extrémité plane ou arrondie.

Selon la forme de réalisation représentée sur les figures, ces plots de centrage présentent des chanfreins opposés 13 et 14 suivant la direction générale transversale. Ils sont, de préférence, montés rétractables, c'est-à-dire susceptibles de s'escamoter ou de s'effacer par affaissement ou enfoncement dans un logement bas situé en-dessous du plan porteur du bogie. Selon cette variante, des moyens élastiques de rappel en position sortie sont nécessaires pour assurer le fonctionnement en coopération avec les moyens complémentaires. Ces moyens élastiques de rappel ne sont pas représentés sur les figures.

On décrira maintenant les structures complémentaires prévues sur la structure transversale d'extrémité 1 pour la réalisation de l'accouplement et du verrouillage.

On distingue tout d'abord à chacune des extrémités de la traverse d'extrémité 1 des structures d'accouplement à réception longitudinale ou verticale telles que 15. Celles-ci se présentent sous la forme de coins ouverts 16 et 17 prévus pour un engagement longitudinal ou vertical et un blocage vertical après un quart de tour de la tête des éléments de verrouillage 9. Ces coins présentent une conformation en ouverture de réception à engagement vertical à deux étages. D'une part pour l'axe 10 il s'agit d'une fente inférieure 18 et d'autre part pour la tête 11 il s'agit d'une fente supérieure 19. Cette dernière se développe vers l'arrière selon une chambre supérieure circulaire 20 ou quasi circulaire à section transversale d'entrée 21 légèrement supérieure à la section la plus faible de la tête, c'est-à-dire celle de présentation longitudinale pour une réception à engagement longitudinal.

Bien entendu, l'axe étant de mêmes dimensions en diamètre que la largeur de la tête, celle-ci traversera la fente inférieure 18 lors du mouvement vertical d'engagement dans le cas d'un accouplement par déplacement vertical.

L'étage supérieur présente un fond ouvert 22 d'appui de blocage pour la sous-face de la tête 11. Celui-ci comporte une fente longitudinale de largeur légèrement supérieure à la section de l'axe 11. La hauteur de l'étage inférieur dépasse légèrement la longueur de l'axe 10 de manière à permettre le mouvement de la tête 11 en vue du blocage de verrouillage.

On comprendra que le blocage est assuré après une simple rotation d'un quart de tour de la tête de chaque élément de verrouillage 9, lorsqu'elle se trouve en position complètement entrée dans le coin.

En raison de la forme de la chambre supérieure, ce blocage assure également une immobilisation longitudinale.

On examinera maintenant les structures d'accouplement proprement dites, adaptées à coopérer avec les plots de centrage. Il s'agit de structures de réception verticales 23 disposées en regard des plots de centrage, structures intégrées dans deux blocs de reprise 24 et 25 destinés à coopérer avec les plots de centrage.

Ces structures se présentent sous la forme d'un guide 26 suivi d'une cavité de réception verticale 27.

Le guide 26 comporte une fenêtre d'entrée 28 suivie d'une rampe de convergence 29 inclinée du haut vers le bas, permettant d'enfoncer par glissement-poussée les plots de centrage dans leur logement. La rampe de convergence 29 est suivie de la cavité de réception verticale 27 réalisée sous la forme d'un fourreau d'usure adapté dans lequel vient remonter, en position sortie, le plot de centrage sous l'effet de moyens de rappel.

Les fourreaux étant des pièces d'usure sont réalisés sous la forme de pièces interchangeables garnissant chaque cavité réceptrice 23. Lesdites cavités sont de forme conique, ouvertes en partie supérieure, permettant l'action d'un dispositif de dégagement ou d'extraction sous la forme d'un basculeur à pièce de basculement 30 actionné par un organe moteur, par exemple un soufflet pneumatique 31, dont le gonflage permet, grâce à l'action de poussée de la pièce de basculement 30 sur l'extrémité du plot de centrage adjacent, l'enfoncement de celui-ci dans son logement et, par conséquent, son extraction des structures de réception et sa libération puis son dégagement longitudinal en vue du désaccouplement lors d'un désaccouplement par translation longitudinale.

Afin de garantir l'immobilisation des plots de centrage par rapport à la traverse ou l'immobilisation en position sortie lorsqu'ils sont rétractables, on prévoit un dispositif d'inter-verrouillage (non représenté). Ce dispositif peut, par exemple, offrir un verrouillage manuel ou télécommandé en position sortie et nécessiter une action de déverrouillage pour permettre l'enfoncement du plot de centrage.

Selon une variante, il est envisagé de commander le dispositif de verrouillage, par exemple par une tige centrale et coaxiale au plot de centrage qui émergerait ainsi, au centre de l'extrémité du plot, d'une distance représentant la course de déverrouillage.

Ainsi, aussi bien le bord supérieur de la fenêtre d'entrée 28 que l'extrémité de la pièce de basculement permettent, par leur action d'appui, de libérer chaque plot de centrage 12 en mouvement d'enfoncement dans son logement.

Ce blocage-verrouillage permet d'obtenir une sécurité supplémentaire de l'accouplement exigée dans certains cas.

On expliquera maintenant le fonctionnement des moyens ci-dessus en se référant plus particulièrement aux figures 2, 3 et 4.

L'opération d'accouplement peut s'effectuer de deux façons différentes : soit par un mouvement de translation longitudinale, soit par un mouvement de déplacement vertical.

La remorque ou caisse mobile est amenée par des moyens, par exemple routiers ou de manutention ou la combinaison des deux, à proximité des bogies, le but étant d'accoupler chacune de ses deux extrémités avant et arrière à un support transversal porteur de bogie.

Dans le cas d'une manipulation purement verticale avec plots de centrage non rétractables, la remorque ou caisse mobile est levée par des moyens de manutention au-dessus du plan de deux bogies adjacents amenés en rapprochement jusqu'à se trouver à une distance telle que les structures de réception viennent se placer approximativement au-dessus des plots de centrage. En raison des rampes coniques des plots, et de la forme convergente des structures de réception le mouvement d'abaissement de la remorque ou de la caisse mobile provoquera automatiquement le centrage. On procède ensuite aux verrouillages appropriés.

Une autre façon de procéder dans le cas de plots non rétractables consiste à bénéficier de moyens de manutention intégrés à la remorque permettant de lever suffisamment successivement chacune de ses extrémités, tels que béquilles télescopiques, suspensions à soufflets pneumatiques à grand débattement ou autres. A l'aide de ces moyens, on peut lever une extrémité de la remorque pour la faire dépasser du support porteur du bogie et des plots, amener les structures de réception approximativement en face des plots de centrage et abaisser l'extrémité pour réaliser l'accouplement à une des extrémités. L'accouplement de l'autre extrémité s'effectue de la même façon.

Les plots rétractables associés aux rampes de convergence permettent en plus un accouplement-désaccouplement par translation longitudinale.

Les deux accouplements d'extrémité peuvent être considérés comme identiques. Aussi n'en sera-t-il décrit ci-après qu'un seul, l'autre s'en déduisant par simple identité.

La remorque ou le bogie est amené(e) à proximité de l'extrémité correspondante jusqu'à quasi contact du support transversal porteur de bogie avec la structure transversale d'extrémité de remorque.

Le châssis de la remorque ou de la caisse mobile est levé par des moyens extérieurs de manutention ou des moyens intégrés jusqu'à la hauteur du support transversal de bogie. La hauteur est telle que les plans des structures transversales de bogie et d'extrémité de remorque peuvent se déplacer en contact l'un sur l'autre, extrémité de remorque sur support transversal porteur de bogie.

On commande ensuite le mouvement longitudinal d'accouplement, de préférence par le bogie, au cours duquel les verrous viennent s'encastrer dans les coins 16 et 17 et les plots de centrage 12 se loger dans les structures de réception verticale 23.

Selon l'exemple choisi, les plots de centrage sont rétractables et l'accouplement s'effectue par mouvement de translation longitudinale. Ils s'affaissent au fur et à mesure de leur progression le long des rampes convergentes 29 des guides 26 jusqu'à leur position en face des cavités de réception 27, dans lesquelles ils viennent se loger, sous l'effet des moyens de rappel, en position sortie. Pendant ce temps, les pièces de verrou sont entrées par translation longitudinale dans les coins 16 et 17 grâce au centrage longitudinal opéré par les guides 26. Les têtes dirigées longitudinalement sont disposées en position centrale dans la chambre supérieure. Il suffit de les tourner d'un quart de tour pour obtenir le verrouillage.

Concernant le désaccouplement, les manoeuvres s'avèrent approximativement inverses. On en décrira ci-après les principales phases.

Dans le cas d'une manipulation purement verticale, les plots de centrage étant fixes, l'extrémité du basculeur du dispositif d'extraction ne joue aucun rôle particulier.

L'extraction s'effectue naturellement après libération des coins 16 et 17 des pièces de verrou lors de la montée de la remorque ou caisse mobile suite au mouvement de traction de l'engin de levage.

Dans le cas de plots de centrage rétractables sous l'action du soufflet 31, l'extrémité de chaque basculeur appuie dans un premier temps sur la tige de commande émergeant de la tête du doigt de centrage pour provoquer le déverrouillage. Cet appui se poursuit jusqu'à enfoncement complet de chaque plot de centrage dans son logement correspondant. Après libération des coins 16 et 17, le déplacement relatif du bogie par rapport à la structure transversale d'extrémité peut avoir lieu. Au cours de ce déplacement, les plots reprennent graduellement leur position sortie au fur et à mesure de l'éloignement de la remorque ou caisse du bogie par glissement-poussée sur les rampes de convergence 29 jusqu'à libération totale en sortie de chaque plot.

L'autre extrémité de la remorque ou de la caisse est libérée de la même façon jusqu'à désaccouplement total.

Bien entendu, d'autres méthodes d'accouplement et de désaccouplement sont possibles sans sortir du cadre et de l'esprit de l'invention.

**Revendications**

1. Structure transversale d'extrémité pour une unité routière ou une caisse mobile convertible permettant sa conversion rail-route appelée à être montée et verrouillée sur la traverse porteuse d'un bogie en vue de constituer une unité ferroviaire susceptible de s'intégrer dans un train ferroviaire par accouplement et verrouillage, caractérisée en ce qu'elle comporte au voisinage de chacune de ses extrémités des moyens d'accouplement et des moyens de verrouillage à réception verticale et horizontale permettant alternativement un accouplement et un verrouillage par déplacement vertical de l'unité routière (5) porteuse d'un chargement et un accouplement par translation relative longitudinale entre les bogies (7) et l'unité routière (5).

2. Structure transversale d'extrémité selon la revendication 1, caractérisée en ce que les moyens d'accouplement coopèrent avec des plots de centrage (12) et en ce que les moyens de verrouillage sont des structures à réception verticale et longitudinale (15).

3. Structure transversale d'extrémité selon la revendication 1, caractérisée en ce que les plots de centrage (12) sont rétractables.

4. Structure transversale d'extrémité selon les revendications 1 et 2, caractérisée en ce que les plots de centrage (12) s'effacent par enfoncement dans le logement bas situé en dessous du plan porteur (8) du bogie (7).

5. Structure transversale d'extrémité selon les revendications 1 et 2, caractérisée en ce que le dispositif de dégagement prend appui sur l'extrémité du plot de centrage (12) pour le dégager de la structure de réception (27) ou dégager celle-ci du plot.

6. Structure transversale d'extrémité, caractérisée en ce que le dispositif de dégagement est un basculeur actionné par un organe moteur (31), ledit basculeur agissant par pression de l'une de ses extrémités libres sur la partie supérieure du plot de centrage (12) adjacent en vue de son extraction de la structure de réception (23) correspondante.

7. Structure transversale d'extrémité, caractérisée en ce qu'elle présente en face de chaque plot de centrage une fenêtre d'entrée (28) suivie d'une rampe (29) inclinée vers les structures de réception verticales (23) pour l'engagement des plots de centrage (12) dans les structures de réception verticales (23).

FIG.1

FIG.2

FIG.3

FIG.4

EP 0 477 115 A1

**Office européen des brevets**

# RAPPORT DE RECHERCHE EUROPEENNE

Numero de la demande

EP 91 44 0073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 416 571 (R.KRAUSE)<br>* colonne 2, ligne 30 - ligne 45; figures 1-10 *<br>--- | 1 | B60F1/00<br>B61D3/18<br>B61D3/20 |
| A | US-A-3 070 041 (J.GUTRIDGE)<br>* colonne 9, ligne 7 - ligne 22 *<br>* colonne 12, ligne 30 - ligne 59 *<br>* colonne 13, ligne 70 - colonne 14, ligne 11 *<br>* colonne 14, ligne 50 - ligne 65; figures 1-49 *<br>--- | 1 | |
| A | FR-A-1 368 963 (P.PERROT)<br>* le document en entier *<br>--- | 1 | |
| A | FR-A-2 250 657 (Y.GRANDURY)<br>* le document en entier *<br>--- | 1 | |
| A | US-A-4 665 834 (W.IPEREN)<br>* colonne 6, ligne 43 - ligne 51; figures 1-4 *<br>----- | 1,5 | |

|  |  |  | DOMAINES TECHNIQUES RECHERCHES (Int. Cl.5 )<br><br>B60F<br>B61D |
|---|---|---|---|

Le présent rapport a été établi pour toutes les revendications

| Lieu de la recherche | Date d'achèvement de la recherche | Examinateur |
|---|---|---|
| LA HAYE | 19 DECEMBRE 1991 | CZAJKOWSKI A. R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)